**Europäisches Patentamt**

**European Patent Office**

**Office européen des brevets**

(19)

(11) Veröffentlichungsnummer: **0 085 308**
**B1**

# (12) EUROPÄISCHE PATENTSCHRIFT

(45) Veröffentlichungstag der Patentschrift:
04.12.85

(21) Anmeldenummer: **83100185.4**

(22) Anmeldetag: **12.01.83**

(51) Int. Cl.⁴: **G 02 B 21/22**

(54) **System variabler Schnitt- und Brennweite.**

(30) Priorität: **23.01.82 DE 3202075**

(43) Veröffentlichungstag der Anmeldung:
**10.08.83 Patentblatt 83/32**

(45) Bekanntmachung des Hinweises auf die Patenterteilung:
**04.12.85 Patentblatt 85/49**

(84) Benannte Vertragsstaaten:
**CH DE FR GB IT LI**

(56) Entgegenhaltungen:
**DE - U - 1 827 188**
**FR - A - 1 291 600**
**GB - A - 926 683**
**US - A - 3 502 392**

(73) Patentinhaber: **Firma Carl Zeiss, D-7920 Heidenheim (Brenz) (DE)**

(72) Erfinder: **Muchel, Franz, Dipl.-Phys., Lortzingstrasse 2, D-7923 Königsbronn (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein optisches System variabler Schnitt- und Brennweite. Es ist in erster Linie für die Verwendung in Operationsmikroskopen vorgesehen, kann aber auch in anderen optischen Systemen, beispielsweise bei Stereomikroskopen in der Technik (Technoskopen) oder auch bei monokularen Beobachtungsgeräten verwendet werden.

Bei Verwendung von Stereomikroskopen in der Medizin und in der Technik wird gefordert, daß Anpassungen des Arbeitsabstandes an unterschiedliche Objekthöhen ohne Positionsänderung des schweren Mikroskopkörpers vorgenommen werden können und daß bei fixiertem Arbeitsabstand die Brennweite des Stereomikroskops verändert werden kann.

Aus der DE-OS 2 439 820 ist es beispielsweise bekannt, zur Anpassung des Arbeitsabstandes an unterschiedliche Objekthöhen ohne Positionsänderung des Mikroskopkörpers ein Operationsmikroskop mit einem fokussierbaren Hauptobjektiv auszustatten. Diese bekannte Lösung hat den Nachteil, daß sich für den Mikroskopkörper eine große Bauhöhe ergibt. Für einen großen Schnittweitenbereich ist auch ein großer Verschiebeweg des Objektivs erforderlich. Eine Brennweitenänderung bei fixiertem Arbeitsabstand ist bei diesem bekannten Operationsmikroskop nicht vorgesehen.

Der Erfindung liegt deshalb die Aufgabe zugrunde, ein optisches System anzugeben, mit dessen Hilfe sowohl die Forderung nach Anpassung des Arbeitsabstandes an unterschiedliche Objekthöhen als auch nach Veränderung der Brennweite bei fixiertem Arbeitsabstand zu erfüllen sind.

Diese Aufgabe wird erfindungsgemäß mit einem optischen System mit den kennzeichnenden Merkmalen des Anspruchs 1 erfüllt.

Die zweite Linsengruppe kann nach Art eines Pankraten veränderliche Brennweite oder nach Art von einschwenkbaren Fernrohren feste Brennweite haben.

Die mit der Erfindung erzielten Vorteile bestehen insbesondere darin, daß sie eine kompakte Bauweise eines Operationsmikroskops ermöglicht. Wegen der kleinen Linsendurchmesser läßt sich das erfindungsgemäße optische System leichter korrigieren als es nach dem Stand der Technik bekannt ist.

Ein Ausführungsbeispiel der Erfindung ist in der Zeichnung dargestellt und wird im folgenden näher beschrieben. Es zeigt

Fig. 1 eine schematische Darstellung des optischen Systems in dem zu einem Okular führenden Strahlengang eines Operationsmikroskops,

Fig. 1a eine graphische Darstellung der Eingangs- und Ausgangspupillen bei verschiedenen Vergrößerungsmaßstäben,

Fig. 2 eine graphische Darstellung der Brennweite f des optischen Systems als Funktion der Eingangsschnittweite $s_0$,

Fig. 3 eine schematische Darstellung für die Verschiebung der ersten verschiebbaren Linsengruppe des optischen Systems.

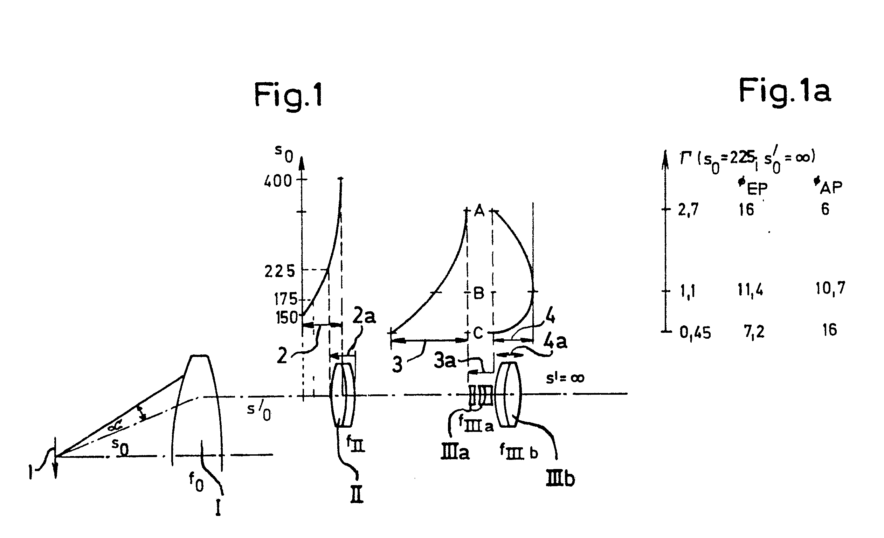

In der Abbildung der Fig. 1 ist mit I das Hauptobjektiv eines Operationsmikroskops bezeichnet. Es hat die Brennweite $f_0 = 225$ mm. Die numerische Apertur des Operationsmikroskops ist mit $\alpha$, die Eingangsschnittweite mit $s_0$ und das Sehfeld mit dem Pfeil 1 gekennzeichnet. Die Eingangsschnittweite $s_0$ bedeutet gleichzeitig den Arbeitsabstand des Operationsmikroskops. Ist $s_0 = f_0$ gewählt, so erzeugt das Hauptobjektiv I ein im Unendlichen liegendes Bild des Objektes, d. h. $s_0'$ ist $\infty$.

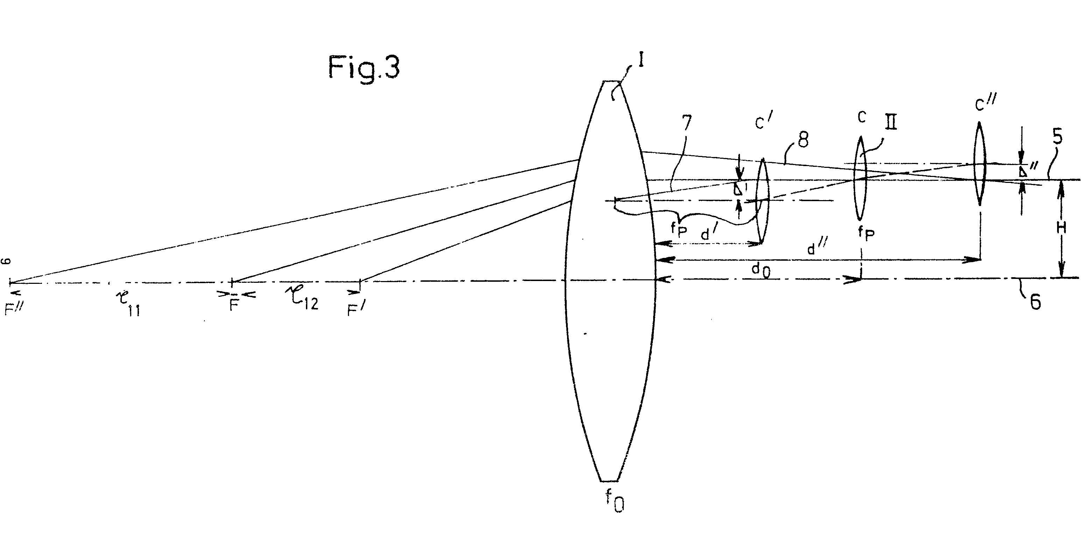

Die Strecke 2 bezeichnet den Bereich, in dem die Linsengruppe II in Richtung 2a verschiebbar ist. Die über der optischen Achse eingezeichnete Funktion zeigt die Abhängigkeit der Eingangsschnittweite $s_0$ vom Abstand zwischen Linsengruppe II und Hauptobjektiv I. Für die Eingangsschnittweiten $s_0 = 150, 175, 225$ und 400 sind durch Lote auf die optische Achse die Abstände der Linsengruppe II angezeigt. In der in Fig. 1 dargestellten Lage befindet sich die Linsengruppe II in der Stellung, die eine Eingangsschnittweite und damit einen Arbeitsabstand von 225 mm erlaubt. In ihrer dem Hauptobjektiv I am nächsten gelegenen Lage hat das Operationsmikroskop einen Arbeitsabstand von 150 mm. Beim Verschieben der Linsengruppe II in Richtung des Pfeiles 2a ist auch eine Bewegung dieser Linsengruppe senkrecht zur optischen Achse erforderlich, wie anhand der Fig. 3 noch erläutert wird. Die Brennweite $F_{II}$ der Linsengruppe II beträgt 50,6 mm. In den über der Linsengruppe IIIa, IIIb dargestellten Funktionskurven sind die Vergrößerungsmaßstäbe $\Gamma = 0,45$, $\Gamma = 1,1$ und $\Gamma = 2,7$ markiert, die sich ergeben, wenn die Linsengruppe IIIa im Bereich 3 in Pfeilrichtung 3a und die Linsengruppe IIIb im Bereich 4 in Richtung des Doppelpfeils 4a bewegt werden. Zum Durchlaufen der drei markierten Vergrößerungsmaßstäbe A, B und C muß die Linsengruppe IIIb also aus der in Fig. 1 gezeichneten Stellung für die Vergrößerung A zuerst vom Hauptobjektiv I weg und dann wieder zum Hauptobjektiv I hin bewegt werden, während die Linsengruppe IIIa zum Durchlaufen der Vergrößerungsmaßstäbe von A bis C nur in einer Richtung bewegt wird.

In der graphischen Darstellung der Fig. 1a sind für die Punkte A, B und C der Funktionskurve die Vergrößerungsmaßstäbe $\Gamma = 2,7$, 1,1 und 0,45 eingetragen und dazu die Eintrittspupillen $\Phi_{EP}$ und Austrittspupillen $\Phi_{AP}$ des Operationsmikroskops. Die Schnittweite $s_0$ ist hier 225 mm.

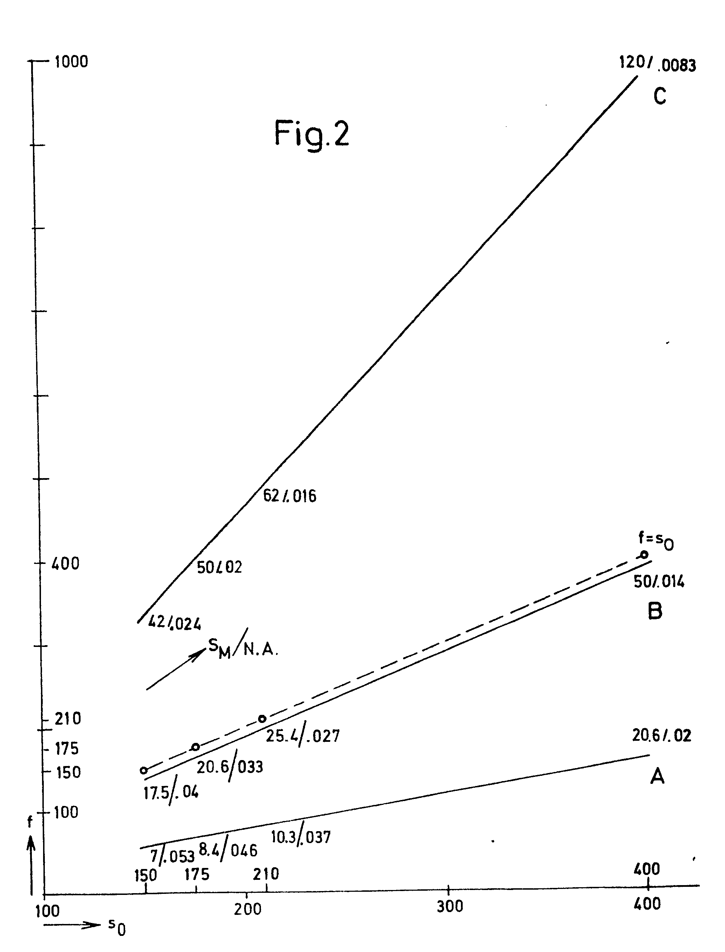

In der graphischen Darstellung der Fig. 2 sind für die den Punkten A, B und C entsprechenden Vergrößerungsmaßstäbe für Arbeitsabstände $s_0$ von 150 mm bis 400 mm die Brennweitenverteilungen f des Operationsmikroskops von 57 mm bis 1000 mm eingezeichnet. Die bei den Kurven eingetragenen Zahlenwerte bedeuten das Verhältnis von Sehfeld $S_M$ zu numerischer Apertur N.A.

Die Darstellung der Fig. 2 zeigt, daß es für jeden Arbeitsabstand $s_0$, der durch Verschieben der Linsengruppe II einstellbar ist durch Verschieben der Linsengruppe III möglich ist die Brennweite des Gesamtsystems zwischen 57 und 1000 mm zu verstellen. Damit ist es auch möglich, durch entsprechendes Verschieben der Linsengruppen II und III zu einer vorbestimmten Brennweite, d. h. Vergrößerung des Gesamtsystems einen geeigneten Arbeitsabstand zwischen 150 und 400 mm einzustellen.

In der Darstellung der Fig. 3 ist gezeigt, wie die Linsengruppe II senkrecht zur optischen Achse verstellt werden muß, wenn sie zur Änderung des Arbeitsabstandes $s_0$ im Bereich 2 der Fig. 1 bewegt wird.

In der Stellung C, in der das Linsensystem II die Entfernung $d_0$ vom Hauptobjektiv I hat, geht der vom Brennpunkt F dieses Objektivs ausgehende Strahl durch die Mitte des Linsensystems II und verläuft hinter diesem System entlang der optischen Achse 5. Diese ist um den Betrag H gegen die durch den Mittelpunkt des Objektivs I gehende optische Achse 6 verschoben und verläuft parallel dazu. Es kommt nun darauf an, durch entsprechende Bewegung des Linsensystems II senkrecht zur optischen Achse 5 dafür zu sorgen, daß unabhängig von der axialen Stellung des Systems die optische Achse des aus dem Linsensystem II austretenden Lichtes mit der optischen Achse 5 zusammenfällt.

Wird der Fokussierungsbereich um den in Fig. 3 mit $\mathcal{t}_{12}$ bezeichneten Newton'schen Wert in Richtung auf das Hauptobjektiv I verschoben, so verläuft der vom Punkt F' ausgehende Strahl hinter dem Objektiv I in Richtung 7. Der Strahl 7 trifft auf das in Stellung C' bewegte Linsensystem II, dessen Abstand vom Objektiv I jetzt d' ist und das um die Strecke $\varDelta'$ nach unten verschoben ist. Dadurch ist erreicht, daß der Strahl 7 hinter dem Linsensystem II in Richtung der optischen Achse 5 verläuft.

Wird der Fokussierungsbereich um den in Fig. 3 mit $\mathcal{t}_{11}$ bezeichneten Newton'schen Wert in Richtung auf einen größeren Arbeitsabstand verschoben, so verläuft der vom Punkt F'' ausgehende Strahl hinter dem Objektiv I in Richtung 8. Der Strahl 8 trifft aus das in Stellung C'' bewegte Linsensystem II, dessen Abstand vom Objektiv I jetzt d'' ist und das um die Strecke $\varDelta''$ nach oben verschoben ist. Dadurch ist erreicht, daß der Strahl 8 hinter dem Linsensystem II in Richtung der optischen Achse 5 verläuft.

Der Betrag $\varDelta$ errechnet sich aus den Newton'schen Formeln zu

$$|\varDelta| = \frac{f_p \cdot H}{f_0 - d - \frac{f_p^2}{\mathcal{t}}},$$

worin

$f_p$   die Brennweite der Linsengruppe II,
$f_0$   die Brennweite des Objektivs I,
$H$   die Entfernung der optischen Achse 5 und 6,

$d$   die Entfernung der Linsengruppe II vom Objektiv I und den
$\mathcal{t}$   Newton'sche Wert ( $\mathcal{t}_{11}$ und $\mathcal{t}_{12}$ der Fig. 3)

bedeuten.

Im folgenden Zahlenbeispiel werden für die aus der Zeichnung ersichtlichen $\mathcal{t}_{11}$, $\mathcal{t}_{12}$ Newton'schen Werte mit $f_0 = 225$, $f_p = 50$ und $d_0 = 30$ folgende Zahlenwerte erhalten:

$$\mathcal{t}_{11} = -175 \quad d = 34{,}72 \quad \varDelta = 1{,}147$$
$$\mathcal{t}_{12} = 75 \quad d = 24{,}10 \quad \varDelta = -1{,}16$$

**Patentansprüche**

1. Optisches System variabler Schnitt- und Brennweite für Stereomikroskope, bei denen ein gemeinsames Objektiv (1) fester Brennweite zur Bilderzeugung in beiden Strahlengängen dient, dadurch gekennzeichnet, daß ein aus zwei Linsengruppen (II und IIIa, IIIb) bestehendes optisches System variabler Brennweite hinter dem Objektiv (1) angeordnet ist, dessen erste Linsengruppe (II) verschiebbar angeordnet ist und das von dem vom Objektiv (1) erzeugten reellen, virtuellen oder im Unendlichen liegenden Bild ein reelles Bild im Brennpunkt der zweiten Linsengruppe (IIIa, IIIb) entwirft.

2. Optisches System nach Anspruch 1, dadurch gekennzeichnet, daß die zweite Linsengruppe aus zwei Gliedern (III, IIIb) besteht, die auf der optischen Achse verschiebbar angeordnet sind, wobei sie zur Veränderung der Brennweite in ihrer Bewegung miteinander gekoppelt und auf Kurven zwangsgeführt sind.

3. Optisches System nach Anspruch 1, dadurch gekennzeichnet, daß die erste Linsengruppe (II) des Systems zugleich axial und senkrecht zur optischen Achse (5) bewegbar ist.

**Claims**

1. An optical system of variable focal and back-focal length for operation microscopes, comprising an objective (I) of fixed focal length, combined with an optical system of variable focal length including a first lens group (II) and a second lens group (IIIa, IIIb), the objective (I) projecting an image of an object, and the first lens group (II) of the system being displaceable and imaging the image projected by the objective (I) into the focal point of the second lens group of the system (IIIa, IIIb).

2. The invention defined in claim 1, wherein the components of the second lens group (IIIa, IIIb) are displaceable on the optical axis, and are coupled together for movement and guided by force on curved tracks in order to change the focal length of the system.

3. The invention defined in claim 1, wherein the first lens group (II) is simultaneously displaceable axially and perpendicularly to the optical axis (5).

**Revendications**

1. Système optique à distance frontale et distance focale variables pour stéréomicroscopes dans lesquels un objectif commun (1) à focale fixe sert à la formation de l'image selon les deux trajets du faisceau, caractérisé en ce qu'un système optique à focale variable, composé de deux groupes de lentilles (II et IIIa, IIIb) est placé derrière l'objectif (1), dont le premier groupe de lentilles (II) est disposé déplaçable, et l'image réelle, virtuelle ou à l'infini produite par l'objectif (1), projette une image réelle au foyer du second groupe de lentilles (IIIa, IIIb).

2. Système optique selon la revendication 1, caractérisé en ce que le second groupe de lentilles est constitué de deux composants (IIIa, IIIb) qui sont disposés déplaçables sur l'axe optique, les composants étant couplés dans leurs mouvements et étant guidés à force suivant des courbes pour le changement de la distance focale.

3. Système optique selon la revendication 1, caractérisé en ce que le premier groupe de lentilles (II) du système est déplaçable à la fois axialement et perpendiculairement à l'axe optique (5).

Fig.1

Fig.1a

Fig.2

Fig.3